# EUROPEAN PATENT APPLICATION

(11) **EP 3 316 500 A1**
(43) Date of publication of application: **02.05.2018**
(21) Application number: 15897105.1
(22) Date of filing: 29.06.2015
(51) Int. Cl.: H04B 10/516

(54) **OPTICAL TRANSMITTER, OPTICAL RECEIVER, OPTICAL TRANSMISSION SYSTEM, AND OPTICAL TRANSMISSION METHOD**

(71) Applicant: Mitsubishi Electric Corporation, Chiyoda-ku Tokyo 100-8310 (JP)
(72) Inventor: YOSHIDA, Tsuyoshi, Tokyo 100-8310 (JP); SANO, Hayato, Tokyo 100-8310 (JP); BINKAI, Masashi, Tokyo 100-8310 (JP)
(74) Representative: Zech, Stefan Markus
(86) International application number: PCT/JP2015/068708
(87) International publication number: WO 2017/002178

(57) **Abstract**

An optical transmission device includes a data duplicating unit that duplicates signals of each of the lanes subjected to symbol mapping and sets the number of the lanes to the number of lanes of a first number; a waveform converting unit that waveform-converts, for data of each of the lanes, a signal that can take a value of a type of a second number into a signal that can take a value of a type of a third number larger than the second number; a polarity inverting unit that inverts polarity of signals of one or more lanes among the lanes in which the numbers of the values that the signals can take are converted; a lane replacing unit that performs replacement of lanes in two or more lanes; and an optical-signal generating unit that converts electric signals of the signals of each of the lanes input from the lane replacing unit into optical signals and combines and outputs the optical signals of the lanes.

## Description

### Field

The present invention relates to an optical transmission device, an optical reception device, an optical transmission system, and an optical transmission method.

### Background

To perform long-distance large-capacity transmission with an optical fiber, a problem is to overcome high-density signal multiplexing and a fiber nonlinear optical effect.

In an optical transmission device, it is possible to increase a transmission capacity per one optical fiber by carrying different kinds of information on a plurality of optical carrier waves or optical sub-carrier waves, which are sub-carriers, and performing high-density wavelength multiplexing. The optical carrier waves and the optical sub-carrier waves to be multiplexed are respectively called channels. It is also possible to increase the transmission capacity by multiplexing a modulation scheme.

As the modulation scheme, On Off Keying (OKK) for allocating binary signals to presence and absence of light and transmitting one bit per one symbol has been used. However, as in Quaternary Phase-Shift Keying (QPSK) or 16 Quadrature Amplitude Modulation (QAM), it is possible to increase a transmission capacity by increasing signal points and increasing the number of transmission bits per one symbol. In the QPSK and the 16QAM, in an optical transmission device, signals are allocated to an in-phase axis (I axis) and a quadrature-phase axis (Q axis).

There is a known scheme for increasing the number of transmission bits per one symbol by a factor of two by using polarization multiplexing. In polarization multiplexing, it is possible to independently allocate signals to vertical polarization and horizontal polarization, which are two polarization components that are orthogonal to each other.

For demodulation of an OOK signal, a direct detection scheme for detecting and identifying presence or absence of an optical signal on a reception side has been used. For demodulation of a Differential Binary Phase-Shift Keying (DBPSK) signal, a Differential QPSK (DQPSK) signal, and the like, a delay detection scheme or a direct delay detection scheme for directly detecting an optical signal after causing delayed interference of the optical signal has been used. In the polarization multiplexing, a digital coherent scheme for compensating, with digital signal processing, an electric signal obtained by performing coherent detection for causing mixed interference of a local-oscillation light source and a reception signal at a reception end and detecting the reception signal is used. In the digital coherent scheme, a polarization multiplexing QPSK scheme is widely used (see, for example, Non Patent Literature 1 and 2).

On the other hand, when long-distance optical transmission is performed, to secure signal quality at a reception end, an optical signal power-to-noise power ratio corresponding to a bit rate, a modulation scheme, a detection scheme, and the like is necessary. Therefore, it is necessary to perform signal transmission with high optical power. At this time, waveform distortion due to a nonlinear optical effect occurring in an optical fiber deteriorates signal quality (see, for example, Patent Literature 1). The nonlinear optical effect can be roughly divided into an effect occurring in a channel and an effect occurring between channels.

Examples of the nonlinear optical effect occurring in the channel include Self-Phase Modulation (SPM). As a narrow definition, the SPM is classified into Intra-channel SPM (ISPM), Intra-channel Cross-Phase Modulation (IXPM), Intra-channel Four-Wave Mixing (IFWM), and the like. Examples of the nonlinear optical effect occurring between channels include Cross-Phase Modulation (XPM), Four-Wave Mixing (FWM), and Cross Polarization Modulation (XPolM). All of the XPM, the FWM, the XPolM, and the like conspicuously occur when the optical power density of a signal is high and when a transmission distance is long. In the nonlinear optical effect occurring between channels, polarization states of optical signals of the channels have a correlation for a long time in a transmission line when local wavelength dispersion of the transmission line is small or when a wavelength interval of the channels to be wavelength-multiplexed is narrow. When interaction continues, quality deterioration is conspicuous.

In a polarization multiplexed signal, a polarization state changes according to an optical phase difference between vertical polarization and horizontal polarization. Therefore, a relation between a signal carried on the vertical polarization and a signal carried on the horizontal polarization affects a polarization state of a signal.

To reduce the nonlinear optical effect in the channel, there has also been proposed a scheme for performing Return-to-Zero (RZ) pulsing of a signal based on polarization multiplexing and then halving a pulse width of the signal and allocating signal orthogonal polarization alternately for each half symbol (see, for example, Patent Literature 1).

In an orthogonal polarization multiplexed signal, a scheme for applying the RZ pulsing and shifting the RZ pulse by a half symbol between orthogonal polarizations without changing the pulse width of the signal is known as an interleaved RZ (iRZ) scheme. A Binary Phase-Shift Keying (BPSK) scheme that can improve resistance against waveform distortion due to the nonlinear optical effect is also used because an inter-signal point distance can be further expanded than the QPSK widely used in the digital coherent scheme. With polarization multiplexed iRZ-BPSK obtained by combining the iRZ and the polarization multiplexed BPSK, it is possible to expand a system margin in most cases in long-distance optical transmission (see, for example, Non Patent Literature 3).

### Citation List

### Patent Literature

Patent Literature 1: WO 2012/073590

### Non Patent Literature

Non Patent Literature 1: Optical Internetworking Forum, "100G Ultra Long Haul DWDM Framework Document", June 2009
Non Patent Literature 2: E. Yamazaki, 27 others, "Fast optical channel recovery in field demonstration of 100-Gbit/s Ethernet (registered trademark) over OTN using real-time DSP", Optics Express, July 4, 2011, vol. 19, no. 14, pp. 13179-13184.
Non Patent Literature 3: M. Salsi, 7 others, "Recent Advances in Submarine Optical Communication Systems", Bell Labs Technical Journal, vol. 14, no. 4, pp. 131-148, 2010.

### Summary

### Technical Problem

However, according to the conventional technologies of Non Patent Literature 3 and Patent Literature 1, there is a problem in that a large number of components are used in the optical transmission device, such as a modulator for RZ pulsing, an optical modulator for polarization multiplexed BPSK, and an optical filter. There is also a problem in that, among the components, there are components that are not versatile and are not easily acquired. There is also a problem in that the conventional optical transmission device does not have compatibility with other modulation and demodulation schemes, for example, schemes such as the polarization multiplexed QPSK, the polarization multiplexed 16QAM, and a modulation scheme not requiring the RZ pulsing. There is a problem in that signal quality deterioration due to a band characteristic and the like of the modulator for RZ pulsing occurs. Further, there is a problem in that, depending on a transmission condition, it is difficult to secure a system margin even if not only the polarization multiplexed QPSK signal but also the polarization multiplexed BPSK signal is used.

The present invention has been devised in view of the above, and an object of the present invention is to obtain an optical transmission device capable of transmitting an optical signal having high nonlinear resistance with a simple configuration of components.

### Solution to Problem

To solve the problems and achieve the object, an optical transmission device of the present invention includes a data duplicating unit that duplicates signals of lanes subjected to symbol mapping and sets a number of the lanes to a number of lanes of a first number. The optical transmission device includes a waveform converting unit that waveform-converts, concerning the signals of the lanes, a signal that can take a value of a type of a second number into a signal that can take a value of a type of a third number larger than the second number. The optical transmission device includes a polarity inverting unit that inverts polarity of signals of one or more lanes among the lanes in which the numbers of the values that the signals can take are converted. The optical transmission device includes a lane replacing unit that performs replacement of lanes in two or more lanes. The optical transmission device includes an optical-signal generating unit that converts electric signals of the signals of the lanes input from the lane replacing unit into optical signals and combines and outputs the optical signals of the lanes.

### Advantageous Effects of Invention

The optical transmission device according to the present invention achieves an effect that it is possible to transmit an optical signal having high nonlinear resistance with a simple configuration of components.

### Brief Description of Drawings

FIG. 1 is a diagram illustrating an example configuration of an optical transmission system using an optical transmission method according to a first embodiment.
FIG. 2 is a block diagram illustrating an example configuration of an optical transmission device according to the first embodiment.
FIG. 3 is a block diagram illustrating an example configuration of a transmission-electricity processing unit of the optical transmission device according to the first embodiment.
FIG. 4 is a block diagram illustrating an example configuration of an optical-signal generating unit of the optical transmission device according to the first embodiment.
FIG. 5 is a block diagram illustrating an example configuration of an optical reception device according to the first embodiment.
FIG. 6 is a block diagram illustrating an example configuration of an optical-signal detecting unit of the optical reception device according to the first embodiment.
FIG. 7 is a block diagram illustrating an example configuration of a received electricity processing unit of the optical reception device according to the first embodiment.
FIG. 8 is a flowchart illustrating transmission performed by an optical signal, which is the optical transmission method of the optical transmission device according to the first embodiment.
FIG. 9 is a flowchart illustrating reception performed by an optical signal of the optical reception device according to the first embodiment.
FIG. 10 is a diagram illustrating binary electric field signals of four lanes after performed by a symbol mapping unit and a data duplicating unit according to the first embodiment.
FIG. 11 is a diagram illustrating an example of a four-lane multi-value signal after performed by a waveform converting unit, a polarity inverting unit, and a delay adding unit according to the first embodiment.
FIG. 12 is a diagram illustrating, for each of lanes of an optical signal, an example of a signal after performed by a lane replacing unit and an optical-signal generating unit according to the first embodiment.
FIG. 13 is a diagram illustrating an example in which both of an H polarized wave and a V polarized wave are modulated using only an I-axis signal in a comparative example.
FIG. 14 is a diagram illustrating an example in which both of the H polarized wave and the V polarized wave are modulated by duplicating the I-axis signal to a Q axis in the comparative example.
FIG. 15 is a diagram illustrating an example of signal point arrangement according to the first embodiment.
FIG. 16 is a diagram illustrating a four-lane multi-value signal after performed by a waveform converting unit, a polarity inverting unit, and a delay adding unit according to a second embodiment.
FIG. 17 is a diagram illustrating, for each of lanes of an optical signal, an example of a signal after performed by a lane replacing unit and an optical-signal generating unit according to the second embodiment.
FIG. 18 is a diagram illustrating signal point arrangement according to the second embodiment.
FIG. 19 is a diagram illustrating an example of a four-lane multi-value signal after performed by a waveform converting unit, a polarity inverting unit, and a delay adding unit according to a third embodiment.
FIG. 20 is a diagram illustrating, for each of lanes of an optical signal, an example of a signal after performed by a lane replacing unit and an optical-signal generating unit according to the third embodiment.
FIG. 21 is a diagram illustrating an example of signal point arrangement according to the third embodiment.
FIG. 22 is a diagram illustrating an example configuration of hardware for realizing the optical transmission device.
FIG. 23 is a diagram illustrating an example configuration of hardware for realizing the optical transmission device.
FIG. 24 is a diagram illustrating an example configuration of hardware for realizing the optical reception device.
FIG. 25 is a diagram illustrating an example configuration of hardware for realizing the optical reception device.

### Description of Embodiments

Optical transmission devices, optical reception devices, optical transmission systems, and optical transmission methods according to embodiments of the present invention are explained in detail below with reference to the drawings. Note that the present invention is not limited by the embodiments.

### First Embodiment

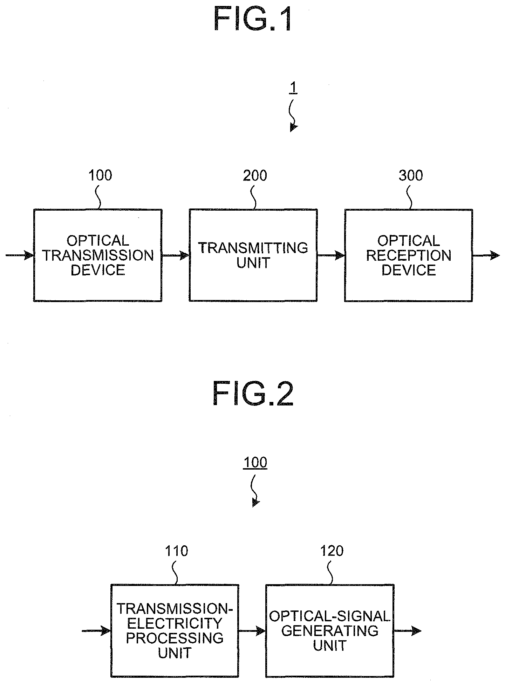

FIG. 1 is a diagram illustrating an example configuration of an optical transmission system 1 that uses an optical transmission method according to a first embodiment of the present invention. The optical transmission system 1 includes an optical transmission device 100; a transmitting unit 200, which is a transmission line in a configuration that includes an optical fiber and an optical repeater; and an optical reception device 300. In the optical transmission system 1, when the optical transmission device 100 transmits an optical signal, the optical reception device 300 receives the optical signal via the transmitting unit 200.

FIG. 2 is a block diagram illustrating an example configuration of the optical transmission device 100 according to the first embodiment. The optical transmission device 100 includes a transmission-electricity processing unit 110 and an optical-signal generating unit 120. The operations of the components are explained where appropriate in the explanation below of the operation of the optical transmission system 1.

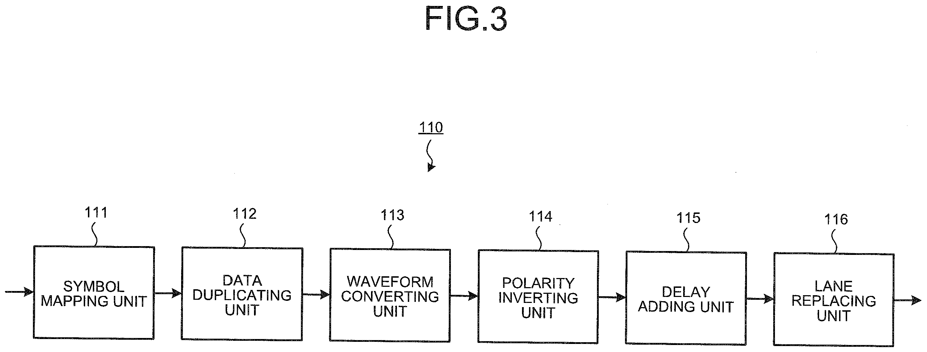

FIG. 3 is a block diagram illustrating an example configuration of the transmission-electricity processing unit 110 of the optical transmission device 100 according to the first embodiment. The transmission-electricity processing unit 110 includes a symbol mapping unit 111, a data duplicating unit 112, a waveform converting unit 113, a polarity inverting unit 114, a delay adding unit 115, and a lane replacing unit 116. The operations of the components are explained where appropriate in the explanation below of the operation of the optical transmission system 1.

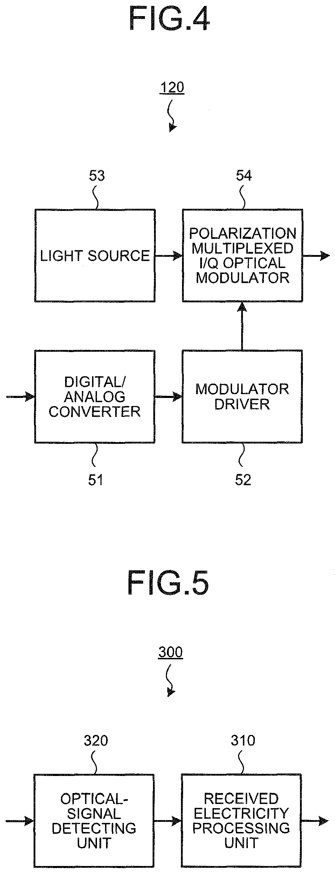

FIG. 4 is a block diagram illustrating an example configuration of the optical-signal generating unit 120 of the optical transmission device 100 according to the first embodiment. The optical-signal generating unit 120 includes a digital/analog converter 51, a modulator driver 52, a light source 53, and a polarization multiplexed I/Q optical modulator 54. The operations of the components are explained where appropriate in the explanation below of the operation of the optical transmission system 1.

FIG. 5 is a block diagram illustrating an example configuration of the optical reception device 300 according to the first embodiment. The optical reception device 300 includes an optical-signal detecting unit 320 and a received electricity processing unit 310. The operations of the components are explained where appropriate in the explanation below of the operation of the optical transmission system 1.

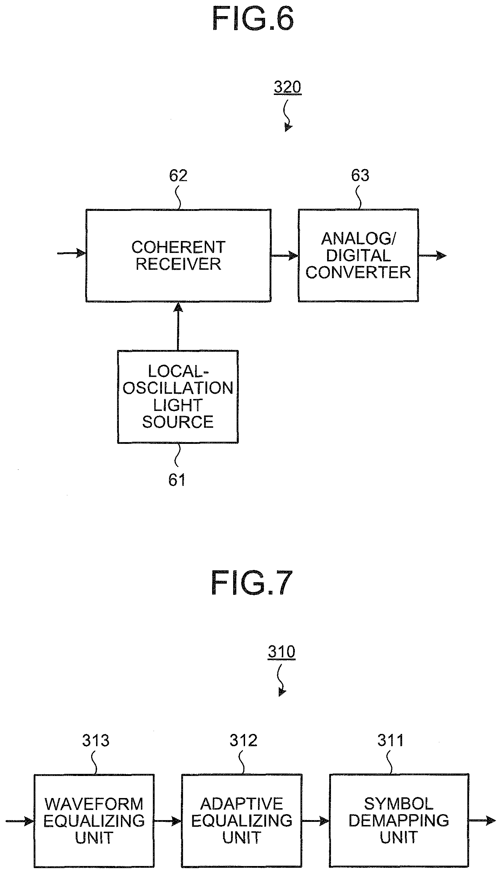

FIG. 6 is a block diagram illustrating an example configuration of the optical-signal detecting unit 320 of the optical reception device 300 according to the first embodiment. The optical-signal detecting unit 320 includes a local-oscillation light source 61, a coherent receiver 62, and an analog/digital converter 63. The operations of the components are explained where appropriate in the following explanation of the operation of the optical transmission system 1.

FIG. 7 is a block diagram illustrating an example configuration of the received electricity processing unit 310 of the optical reception device 300 according to the first embodiment. The received electricity processing unit 310 includes a waveform equalizing unit 313, an adaptive equalizing unit 312, and a symbol demapping unit 311. The operations of the components are explained where appropriate in the explanation below of the operation of the optical transmission system 1.

An operation in which the optical transmission device 100 transmits an optical signal and the optical reception device 300 receives the optical signal via the transmitting unit 200 in the optical transmission system 1 is explained here.

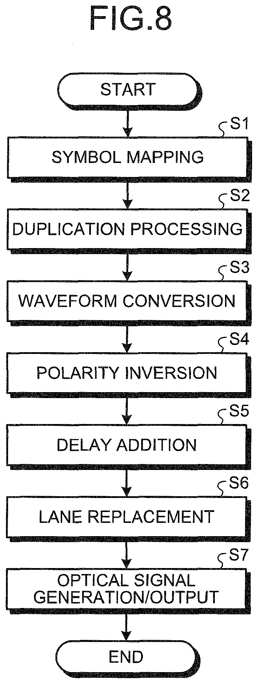

FIG. 8 is a flowchart illustrating transmission processing performed by an optical system, which is an optical transmission method of the optical transmission device 100 according to the first embodiment. The optical transmission device 100 performs the processing explained below on a logical signal input from an external source, or from outside.

The symbol mapping unit 111 of the transmission-electricity processing unit 110 performs symbol mapping on logical signals, which are binary data signals of two lanes, one for an X polarized wave and another for Y polarized wave input from external destinations(step S1). After the symbol mapping, the symbol mapping unit 111 outputs the binary electric field signals of the two lanes to the data duplicating unit 112. The binary data signals of the two lanes input to the symbol mapping unit 111 are, for example, data signals obtained by adding parity for error correction or the like to a 50 Gbit/s-class data signal in which Optical Transport Unit Level 4 (OTU4) is duplicated. The symbol mapping unit 111 maps one data signal onto one symbol. In the following explanation, a state in which one data signal is present in one symbol is represented as 1 Sample/Symbol. The symbol mapping unit 111 performs processing on 1 Sample/Symbol.

The data duplicating unit 112 performs duplication processing on the binary electric field signals of the two lanes input from the symbol mapping unit 111 (step S2). The data duplicating unit 112 generates binary electric field signals in four lanes by using the duplication processing and outputs the generated binary electric field signals of the four lanes to the waveform converting unit 113. The data duplicating unit 112 performs processing on 1 Sample/Symbol. The data duplicating unit 112 duplicates the binary electric field signal of the lanes subjected to symbol mapping and sets the number of lanes to a number of lanes that is equivalent to a first number. The first number is four.

The waveform converting unit 113 inserts zero between sample points with respect to the binary electric field signals of the four lanes represented by 1 Sample/Symbol input from the data duplicating unit 112 and converts the waveform, or waveform-converts, of the binary electric field signal into 2 Sample/Symbol (step S3). The waveform converting unit 113 performs a compensation that is well known in the industry related to band limitation in the optical-signal generating unit 120 and outputs a four-lane multi-value signal represented by 2 Sample/Symbol to the polarity inverting unit 144. Specifically, the waveform converting unit 113 converts the binary electric field signals into a multi-value signal that can take three values: Hi, Low, and the inserted zero. The waveform converting unit 113 waveform-converts, concerning the duplicated binary electric field signals of the lanes, a signal that can take a value of a type of a second number into a signal that can take a value of a type of a third number larger than the second number. The second number is two and the third number is three.

The polarity inverting unit 114 inverts the polarity of a signal of any lane with respect to the four-lane multi-value signal represented by 2 Sample/Symbol input from the waveform converting unit 113 (step S4). The polarity inverting unit 114 outputs the four-lane multi-value signal represented by 2 Sample/Symbol, in which the polarity of the signal of any lane is inverted, to the delay adding unit 115. The polarity inverting unit 114 inverts the polarity of signals of one or more lanes among the lanes of the four-lane multi-value signal in which the number of values that a signal can take is converted.

The delay adding unit 115 adds a delay among the four lanes with respect to the four-lane multi-value signal represented by 2 Sample/Symbol input from the polarity inverting unit 114 (step S5); however, in this embodiment, the delay adding unit 115 sets the delay amount among the four lanes to zero, i.e., it does not perform the addition of a delay. The addition of a delay is explained in a second embodiment and subsequent embodiments. The delay adding unit 115 does not perform the delay addition in the first embodiment; however, the delay adding unit 115 performs compensation that is well known in the industry related to an unintended delay shift occurring in the optical-signal generating unit 120 and outputs the four-lane multi-value signal represented by 2 Sample/Symbol to the lane replacing unit 116.

The lane replacing unit 116 performs lane replacement on the four-lane multi-value signal represented by 2 Sample/Symbol input from the delay adding unit 115 (step S6). The lane replacing unit 116 outputs the four-lane multi-value signal represented by 2 Sample/Symbol after the lane replacement to the optical-signal generating unit 120. The lane replacing unit 116 performs replacement of lanes on two or more lanes.

The optical-signal generating unit 120 generates an optical signal on the basis of the four-lane multi-value signal represented by 2 Sample/Symbol input from the lane replacing unit 116 of the transmission-electricity processing unit 110 and outputs the optical signal to the transmitting unit 200 (step S7). The optical-signal generating unit 120 converts an electric signal of the four-lane multi-value signal input from the lane replacing unit 116 into an optical signal and combines and outputs optical signals of the lanes.

The operation of the optical-signal generating unit 120 is explained in detail here. The digital/analog converter 51 of the optical-signal generating unit 120 performs digital/analog conversion on a digital signal of the four-lane multi-value signal represented by 2 Sample/Symbol input from the lane replacing unit 116 of the transmission-electricity processing unit 110 and outputs an analog signal after the conversion to the modulator driver 52. For example, when the digital signal input from the lane replacing unit 116 of the transmission-electricity processing unit 110 is configured to have four lanes, which are a vertical polarization I-axis signal, a vertical polarization Q-axis signal, a horizontal polarization I-axis signal, and a horizontal polarization Q-axis signal, then the digital/analog converter 51 performs digital/analog conversion processing on each of the four lanes. The digital/analog converter 51 outputs analog signals of the four lanes to the modulator driver 52.

Note that, in the following explanation, "vertical" of the vertical polarization I-axis signal and the vertical polarization Q-axis signal is sometimes represented as V (Vertical). The vertical polarization I-axis signal and the vertical polarization Q-axis signal are sometimes represented as V polarization I-axis signal and the V polarization Q-axis signal. "Horizontal" of the horizontal polarization I-axis signal and the horizontal polarization Q-axis signal is sometimes represented as H (Horizontal). The horizontal polarization I-axis signal and the horizontal polarization Q-axis signal are sometimes represented as H polarization I-axis signal and the H polarization Q-axis signal.

The modulator driver 52 amplifies the analog signal input from the digital/analog converter 51 and outputs the analog signal after the amplification to the polarization multiplexed I/Q optical modulator 54. For example, when the analog signal input from the digital/analog converter 51 is configured to have four lanes, which are the H polarization I-axis signal, the H polarization Q-axis signal, the V-polarization I-axis signal, and the V-polarization Q-axis signal, then the modulator driver 52 performs amplification processing on each of the four lanes. The modulator driver 52 outputs the analog signal after the amplification of the four lanes to the polarization multiplexed I/Q optical modulator 54.

The light source 53 generates unmodulated light having a wavelength that follows the grid of a C band of the International Telecommunication Union-Telecommunication Standardization Sector (ITU-T), i.e., in a C band of 1530 nanometers to 1565 nanometers conforming to ITU-T G694.1, and outputs the unmodulated light to the polarization multiplexed I/Q optical modulator 54.

The polarization multiplexed I/Q optical modulator 54 modulates the unmodulated light input from the light source 53 with the amplified analog electric signal input from the modulator driver 52 and outputs the unmodulated light to the transmitting unit 200.

The transmitting unit 200 transmits the optical signal input from the polarization multiplexed I/Q converter 54 of the optical-signal generating unit 120 of the optical transmission device 100 and outputs the optical signal to the optical reception device 300. It is assumed that the configuration of the transmitting unit 200 includes, besides a transmission line fiber, for example, an optical multiplexing and demultiplexing device in a configuration that includes a wavelength selective switch (WSS), an arrayed waveguide grating (AWG), an interleaver, an optical coupler; an optical amplifier for loss compensation; and an optical fiber for wavelength dispersion compensation.

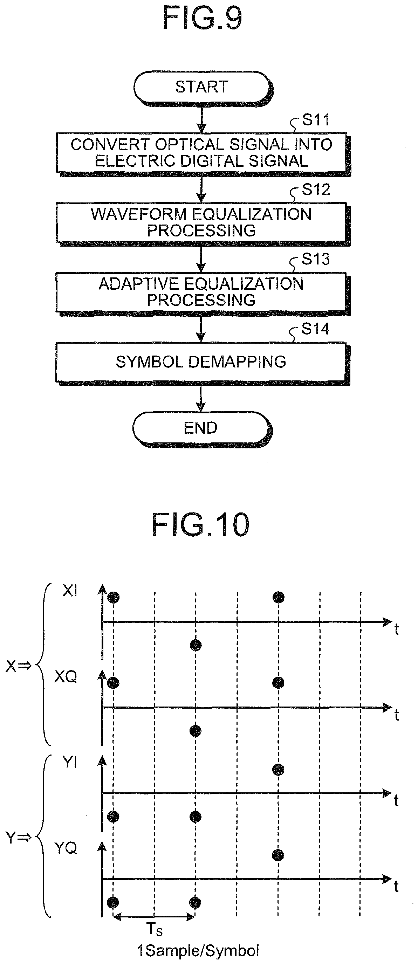

FIG. 9 is a flowchart illustrating reception processing performed on an optical signal of the optical reception device 300 according to the first embodiment. When detecting an optical signal input from the transmitting unit 200, the optical-signal detecting unit 320 of the optical reception device 300 converts the optical signal into an electric digital signal and outputs the electric digital signal to the received electricity processing unit 310 (step S11).

The local-oscillation light source 61 of the optical-signal detecting unit 320 generates, for example, unmodulated light at a wavelength that follows the ITU-T grid of the C band and outputs the unmodulated light to the coherent receiver 62, which is a polarization diversity-type integrated coherent receiver. The wavelength of the unmodulated light emitted by the local-oscillation light source 61 needs to substantially coincide with the wavelength of a carrier wave or a sub-carrier wave of an optical signal input to the coherent receiver 62 from the transmitting unit 200.

The coherent receiver 62 causes mixed interference of the optical signal input from the transmitting unit 200 and the unmodulated light input from the local-oscillation light source 61; converts the optical signal into an electric signal; and outputs the electric signal to the analog/digital converter 63. When detecting a reception signal separately in four lanes, which are an H' polarization I'-axis component, an H' polarization Q'-axis component, a V' polarization I'-axis component, and a V' polarization Q' axis component, on the basis of local oscillation light, the coherent receiver 62 converts the optical signals of the four lanes respectively into electric signals; amplifiers the respective electric signals of the four lanes after the conversion to an amplitude necessary for processing at a post stage; and outputs the electric signals. Note that " ' " is given to H', V', I', and Q'. This is to indicate that, in the optical reception device 300, a horizontal polarization component, a vertical polarization component, an in-phase axis component, and a quadrature phase axis component obtained from a received optical signal are not always the same as a horizontal polarization component, a vertical polarization component, an in-phase axis component, and a quadrature phase axis component of the lanes generated by the optical transmission device 100.

The analog/digital converter 63 analog/digital-converts the electric signal input from the coherent receiver 62 and outputs an electric digital signal after the conversion to the received electricity processing unit 310. The analog/digital converter 63 performs analog/digital conversion processing related to each of the four lanes of the H' polarization I'-axis component, the H' polarization Q'-axis component, the V' polarization I'-axis component, and the V' polarization Q' axis component.

The waveform equalizing unit 313 of the received electricity processing unit 310 performs, on the electric digital signal input from the analog/digital converter 63 of the optical-signal detecting unit 320, waveform equalization processing that is well known in the industry to compensate for waveform distortion such as a physical delay difference, wavelength dispersion, and band constriction caused in the optical-signal generating unit 120, the transmitting unit 200, and the optical-signal detecting unit 320 (step S12). The waveform equalizing unit 313 outputs the electric digital signal after the waveform equalization processing to the adaptive equalizing unit 312.

The adaptive equalizing unit 312 performs, on the electric digital signal input from the waveform equalizing unit 313, adaptive equalization processing to compensate for polarization mode dispersion, a polarization state change, symbol timing extraction, an optical frequency difference and an optical phase difference between a carrier wave or a sub-carrier wave and local oscillation light, and the like (step S13). When restoring a transmission signal by using the adaptive equalization processing, the adaptive equalizing unit 312 outputs the transmission signal after the restoration to the symbol demapping unit 311. The adaptive equalizing unit 312 of the received electricity processing unit 310 specifically compensates, by using the adaptive equalization processing, for phase rotation and polarization rotation added to the electric digital signal by the optical transmission device 100, and also collectively restores the electric digital signal related to the processing performed by the waveform converting unit 113, the polarity inverting unit 114, the delay adding unit 115, and the lane replacing unit 116 of the optical transmission device 100. As the adaptive equalization processing performed by the adaptive equalizing unit 312, a digital signal processing well known in the industry can be used. The restored transmission signal changes to, for example, signals of the four lanes XI, XQ, YI, and YQ generated by the data duplicating unit 112 of the transmission-electricity processing unit 110 of the optical transmission device 100. The signals of the four lanes XI, XQ, YI, and YQ are respectively represented as A_{X}[t], A_{X}[t], A_{Y}[t], and A_{Y}[t].

The symbol demapping unit 311 performs symbol demapping on the basis of the signals of the four lanes, i.e., the transmission signal, after the restoration input from the adaptive equalizing unit 312 (step S14). The symbol demapping unit 311 converts, by using the symbol demapping, the transmission signal after the restoration into binary data signals of two lanes and additional data signals and outputs the binary data signals and the additional data signals to external destinations. The symbol demapping unit 311 is not limited to a 0/1 hard decision and can perform soft decisions for giving reliability information as the additional data signals.

Note that, in the example explained above, the adaptive equalizing unit 312 collectively restores the electric digital signal related to the processing performed by the waveform converting unit 113, the polarity inverting unit 114, the delay adding unit 115, and the lane replacing unit 116 of the optical transmission device 100. The symbol demapping unit 311 performs the symbol demapping on the basis of the signals of the four lanes. However, not only this, but, for example, the adaptive equalizing unit 312 can collectively restore the electric digital signal related to the processing performed by the data duplicating unit 112, the waveform converting unit 113, the polarity inverting unit 114, the delay adding unit 115, and the lane replacing unit 116 of the optical transmission device 100. The symbol demapping unit 311 can perform the symbol demapping on the basis of signals of two lanes.

In the first embodiment, the configuration for performing alternation of the polarization multiplexed BPSK signal is explained. However, this is an example. The optical-signal generating unit 120 of the optical transmission device 100 is compatible with general modulation schemes such as polarization multiplexed QPSK and polarization multiplexed m-value QAM. In the optical-signal generating unit 120 of the optical transmission device 100, it is also possible to realize any spectral shaping.

An example of changes made to signals by processing performed by the components of the optical transmission device 100 according to the first embodiment is explained here.

FIG. 10 is a diagram illustrating an example of binary electric field signals of four lanes after the processing performed by the symbol mapping unit 111 and the data duplicating unit 112 according to the first embodiment. Binary data signals input to the symbol mapping unit 111 are two lanes of X/Y and are equivalent to an orthogonal polarization axis. The data duplicating unit 112 duplicates the signal of the X lane as the XI lane and the XQ lane and duplicates the signal of the Y lane as the YI lane and the YQ lane. There are four lanes XI, XQ, YI, and YQ with respect to a time axis t, which is the horizontal axis of FIG. 10. Data signals are represented by 1 Sample/Symbol, which means one point in one symbol, and binary electric field amplitude values according to the binary data signals of the X/Y lanes input to the symbol mapping unit 111. The length of 1 symbol is T_{S}.

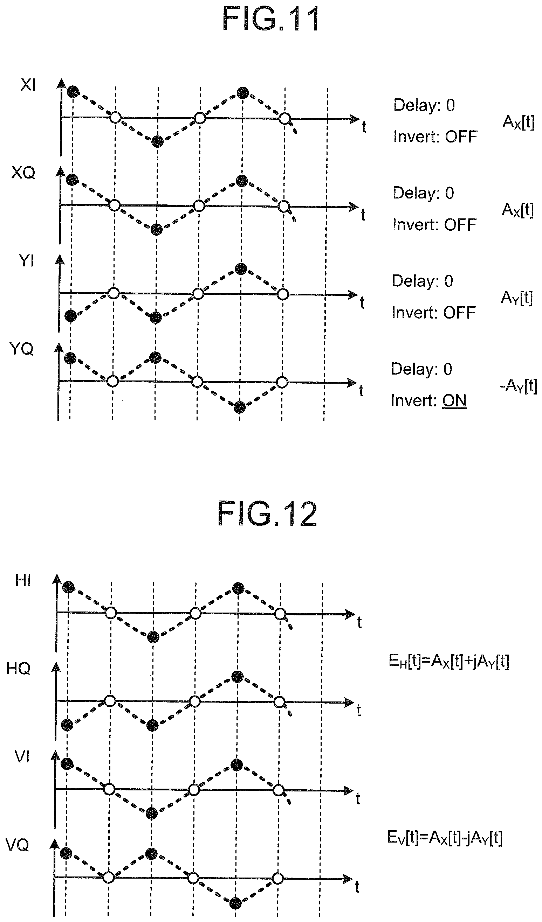

FIG. 11 is a diagram illustrating an example of the four-lane multi-value signal after the processing performed by the waveform converting unit 113, the polarity inverting unit 114, and the delay adding unit 115 according to the first embodiment. The waveform converting unit 113 inserts zero into the middle between symbols to perform the RZ on all four lanes. In the example, the polarity inverting unit 114 inverts the polarity of only the YQ lane. A signal of the XI lane can be represented as Ax[t], a signal of the XQ lane can be represented as Aₓ[t], a signal of the YI lane can be represented as Ay[t], and a signal of the YQ lane can be represented as -Ay[t].

FIG. 12 is a diagram illustrating, for each of the lanes of an optical signal, an example of signals after the processing performed by the lane replacing unit 116 and the optical-signal generating unit 120 according to the first embodiment. The four lanes of the optical signal are illustrated as HI, HQ, VI, and VQ. Note that H indicates horizontal polarization, V indicates vertical polarization, I indicates an in-phase axis, and Q indicates a quadrature phase axis. In FIG. 12, an example is illustrated in which the lane replacing unit 116 performs lane replacement in such a manner as HI=XI, HQ=YI, VI=XQ, and VQ=YQ with respect to XI, XQ, YI, and YQ illustrated in FIG. 11. E_{H}[t]=A_{X}[t]+jA_{Y}[t] and E_{V}[t]=A_{X}[t]-jA_{Y}[t] in FIG. 12, represent optical signals of an H polarized wave and a V polarized wave with complex electric field amplitudes. In the first embodiment, the optical-signal generating unit 120 linearly performs generation processing on an optical signal and performs normalization of amplitude. In the above expressions, j is an imaginary number unit. This is equivalent to processing for performing a 90-degree phase rotation of a Y polarized wave signal and performing 45-degree polarization rotation of a signal represented by X/Y polarized waves.

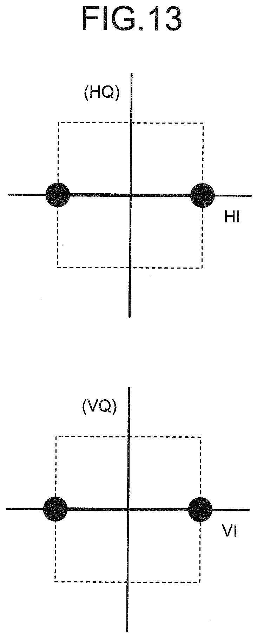

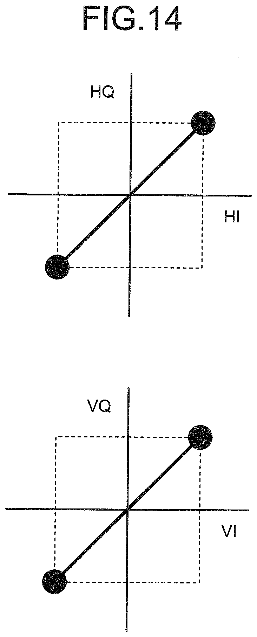

As a comparative example, an example of signal point arrangement of a polarization multiplexed BPSK signal is explained here. FIG. 13 is a diagram illustrating an example in which both an H polarized wave and a V polarized wave are modulated using only an I-axis signal in a comparative example. In the example illustrated in FIG. 13, it is assumed that a polarization multiplexed BPSK modulator is used as an optical modulator. However, an optical transmission device incompatible with other modulation schemes is used. When a polarization multiplexed I/Q modulator is used, it is necessary to quench one side of the I axis and the Q axis. An optical loss increases and compatibility with the other modulation schemes is lost with regard to optical modulator control. FIG. 14 is a diagram illustrating an example in which both of the H polarized wave and the V polarized wave are modulated by duplicating the I-axis signal to a Q axis in the comparative example. In the example illustrated in FIG. 14, it is assumed that a polarization multiplexed I/Q modulator is used as an optical modulator. However, in the optical modulator control, the I-axis signal and the Q-axis signal cannot be regarded as not correlating and they have an extremely strong correlation. Therefore, when an optical phase difference between the I-axis signal and the Q-axis signal is controlled, it is difficult to make the optical phase difference converge to an optical phase difference π/2. Compatibility with the other modulation schemes is lost.

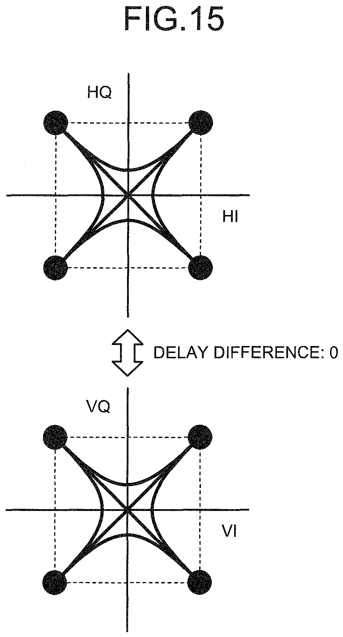

FIG. 15 is a diagram illustrating an example of signal point arrangement according to the first embodiment. In FIG. 15, the illustration in FIG.12 of a time waveform for each lane of an optical signal is represented again as signal point arrangement for each polarization. In both the H polarized wave and the V polarized wave, symbol centers take the same signal points as the QPSK signal. The symbol centers are black circle portions illustrated in FIG. 15. There is no delay difference between the H polarized wave and the V polarized wave. Therefore, the polarization multiplexed I/Q modulator can be used as the optical modulator. The control for QPSK can be used as the optical modulator control. The optical transmission device 100 is compatible with the other modulation schemes. As explained above, in the first embodiment, the optical signal is the signal obtained by adding the phase rotation and the polarization rotation to the polarization multiplexed RZ-BPSK signal. Therefore, the optical signal has nonlinear resistance equivalent to the nonlinear resistance of the polarization multiplexed RZ-BPSK signal. In the optical transmission device 100, the phase rotation and the polarization rotation are added to the signals of the lanes by using the waveform conversion performed by the waveform converting unit 113, the polarity inversion by the polarity inverting unit 114, and the replacement of the lane by the lane replacing unit 116.

Note that the phase rotation and the polarization rotation are compensated for by the adaptive equalization processing performed by the adaptive equalizing unit 312 of the received electricity processing unit 310 of the optical reception device 300. For example, the adaptive equalizing unit 312 can restore A_{X}[t] in accordance with the arithmetic operation "(E_{H}[t]+E_{V}[t])/2" and can restore A_{Y}[t] in accordance with the arithmetic operation "(E_{H}[t]-E_{V}[t]/(2j)".

As explained above, according to this embodiment, the optical transmission device 100 configured from the transmission-electricity processing unit 110 and the optical-signal generating unit 120, which can be configured from versatile components and is compatible with the other modulation schemes, duplicates each of the binary data signals of two lanes and thus configures binary data signals of four lanes; generates optical signals on the basis of a four-lane multi-value signal generated by performing, on the binary data signals of the four lanes, conversion into a waveform of a ternary value or greater, polarity inversion, delay addition, and lane replacement; and transmits a signal obtained by combining the optical signals of the four lanes. In this way, the optical transmission device 100 can generate and transmit, with a simple configuration of components having high versatility, an optical signal that, like the polarization multiplexed RZ-BPSK signal, can reduce a fiber nonlinear optical effect caused during long-distance fiber transmission and suppress quality deterioration of a reception signal. It is possible to achieve a reduction in the cost and to extend the transmission distance of the optical transmission system 1.

### Second Embodiment

In the second embodiment, the delay adding unit 115 of the transmission-electricity processing unit 110 of the optical transmission device 100 adds a delay to an input four-lane multi-value signal. Note that the configurations of the optical transmission system 1 and the devices are the same as the configurations in the first embodiment. The differences from the first embodiment are explained here.

A difference from the first embodiment is in setting of the delay adding unit 115. The delay adding unit 115 adds a delay among four lanes with respect to a four-lane multi-value signal represented by 2 Sample/Symbol input from the polarity inverting unit 114. In the second embodiment, the delay adding unit 115 performs delay addition of a half symbol, i.e., T_{S}/2, to the YI lane and the YQ lane. The delay adding unit 115 outputs the four-lane multi-value signal represented by 2 Sample/Symbol to the lane replacing unit 116.

An example of changes of signals made by the processing performed by the components of the optical transmission device 100 according to the second embodiment is explained.

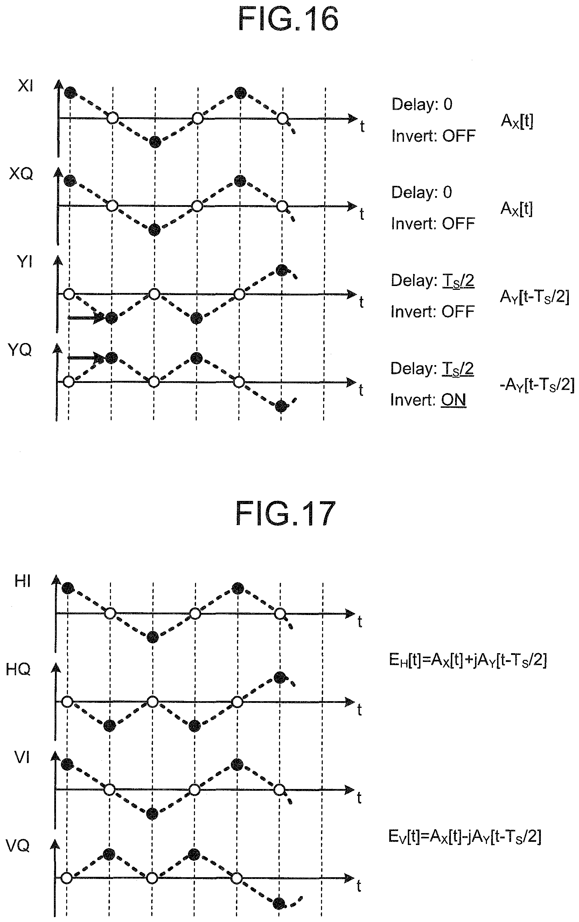

FIG. 16 is a diagram illustrating an example of the four-lane multi-value signal after performed by the waveform converting unit 113, the polarity inverting unit 114, and the delay adding unit 115 according to the second embodiment. As in the first embodiment, the waveform converting unit 113 inserts zero into the middle between symbols to perform the RZ on all four lanes. In the example, the polarity inverting unit 114 inverts the polarity of only the YQ lane. In the second embodiment, delay addition of a half symbol, that is, T_{S}/2 is performed to the YI lane and the YQ lane by the delay adding unit 115. Consequently, in the second embodiment, a signal of the XI lane can be represented as Ax[t], a signal of the XQ lane can be represented as Aₓ[t], a signal of the YI lane can be represented as A_{Y}[t-T_{S}/2], and a signal of the YQ lane can be represented as -A_{Y}[t-T_{S}/2].

FIG. 17 is a diagram illustrating, for each of lanes of an optical signal, an example of a signal after performed by the lane replacing unit 116 and the optical-signal generating unit 120 according to the second embodiment. The four lanes of the optical signal are HI, HQ, VI, and VQ. In FIG. 17, an example is illustrated in which the lane replacing unit 116 performs lane replacement in such a manner as HI=XI, HQ=YI, VI=XQ, and VQ=YQ with respect to XI, XQ, YI, and YQ illustrated in FIG. 16. E_{H}[t]=A_{X}[t]+jA_{Y}[t-T_{S}/2] and E_{V}[t]=A_{X}[t]-jA_{Y}[t-T_{S}/2] in FIG. 17 represent optical signals of an H polarized wave and a V polarized wave with complex electric field amplitudes. In the second embodiment, the optical-signal generating unit 120 linearly performs generation processing on an optical signal and performs normalization of amplitude. In the above expressions, j is an imaginary number unit. This is equivalent to processing for performing 90-degree phase rotation of a Y polarized wave signal, giving a delay difference of T_{S}/2 between X/Y polarized waves, and performing 45-degree polarization rotation of a signal represented by the X/Y polarized waves. Giving T_{S}/2 between X/Y polarized wave signals subjected to the RZ is equal to generating a polarization multiplexed iRZ signal.

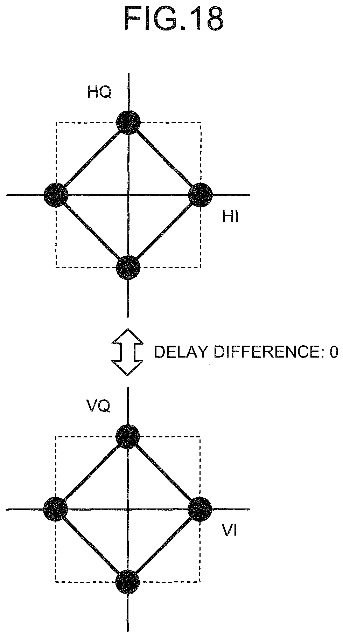

FIG. 18 is a diagram illustrating an example of signal point arrangement according to the second embodiment. In FIG. 18, FIG. 17 illustrating a time waveform for each lane of an optical signal is represented again as signal point arrangement for each polarization. In both of the H polarized wave and the V polarized wave, symbol centers fall on the points obtained by performing 45-degree phase rotation of the QPSK signal. There is no delay difference between the H polarized wave and the V polarized wave. Although the signal point arrangement is different from the signal point arrangement of the QPSK, because signal points are arranged without a correlation with the I axis/the Q axis and equally, the polarization multiplexed I/Q modulator can be used as the optical modulator. The control for QPSK can be used as the optical modulator control. The optical transmission device 100 is compatible with the other modulation schemes. As explained above, in the second embodiment, the optical signal is the signal obtained by adding the phase rotation and the polarization rotation to the polarization multiplexed iRZ-BPSK signal. Therefore, the optical signal has nonlinear resistance equivalent to the nonlinear resistance of the polarization multiplexed iRZ-BPSK signal. In the optical transmission device 100, the phase rotation and the polarization rotation are added to the signals of the lanes by the waveform conversion by the waveform converting unit 113, the polarity inversion by the polarity inverting unit 114, and the replacement of the lane by the lane replacing unit 116.

Note that the phase rotation and the polarization rotation are compensated for by the adaptive equalization performed by the adaptive equalizing unit 312 of the received electricity processing unit 310 of the optical reception device 300. The adaptive equalizing unit 312 of the received electricity processing unit 310 performs adaptive equalization processing to compensate for the phase rotation and the polarization rotation added to the electric digital signal by the optical transmission device 100. For example, the adaptive equalizing unit 312 can restore A_{X}[t] in accordance with the arithmetic operation of "(E_{H}[t]+E_{V}[t])/2" and can restore Ay[t] in accordance with the arithmetic operation of "(E_{H}[t-T_{S}/2]-E_{V}[t-T_{S}/2]/(2j)".

The delay adding unit 115 desirably corrects delay amounts given to the lanes XI, XQ, YI, and YQ to minimize the absolute value of a delay adjustment value from an initial condition. In the second embodiment, the delay adding unit 115 sets relative delay amounts of the lanes as XI: 0, XQ: 0, YI: T_{S}/2, and YQ: T_{S}/2. However, this is an example. The delay adding unit 115 can set the relative delay amounts as XI: -T_{S}/4, XQ: -T_{S}/4, YI: T_{S}/4, and YQ: T_{S}/4.

In the second embodiment, switching speed of a four-lane optical signal is a double of switching speed for each one lane. Therefore, changing speed of a polarization state that changes depending on a data pattern is also a double. Consequently, it is possible to randomize and reduce the influence of a fiber nonlinear optical effect that occurs in the transmitting unit 200 when the polarization state is fixed. In this way, when the four-lane multi-value signal is delayed by the delay adding unit 115, signal switching speed of the optical signal output from the optical-signal generating unit 120 is m times, here, twice as large compared with the signal switching speed of the optical signal output from the optical-signal generating unit 120 when the four-lane multi-value signal is not delayed by the delay adding unit 115 as in the first embodiment. Note that a value of m is a positive number larger than 1.

As explained above, according to this embodiment, the optical transmission device 100 configured by the transmission-electricity processing unit 110 and the optical-signal generating unit 120, which can be configured by versatile components and is compatible with the other modulation schemes, duplicates each of the binary data signals of two lanes into two and configures binary data signals of four lanes; generates optical signals on the basis of a four-lane multi-value signal generated by performing, on the binary data signals of the four lanes, conversion into a waveform of a ternary value or greater, polarity inversion, delay addition, and lane replacement; and transmits a signal obtained by combining optical signals of the four lanes. In this way, the optical transmission device 100 can generate and transmit, with a simple configuration of components having high versatility, an optical signal that, equal to or more than the polarization multiplexed iRZ-BPSK signal, can reduce a nonlinear optical effect caused during long-distance fiber transmission and suppress quality deterioration of a reception signal. It is possible to achieve a reduction in the cost and to extend the transmission distance of the optical transmission system 1. Compared with the first embodiment, it is possible to increase switching speed of the four-lane optical signal.

The optical transmission device 100 can generate and output an optical signal without using non-versatile optical components for inter-polarization delay difference addition. It is possible to avoid signal quality deterioration due to a shift of an inter-polarization delay difference addition amount.

### Third Embodiment

In a third embodiment, an example different from the second embodiment is explained related to the case in which the delay adding unit 115 of the transmission-electricity processing unit 110 of the optical transmission device 100 adds a delay to an input four-lane multi-value signal. Note that the configuration of the optical transmission system 1 and the devices are the same as the configurations in the first embodiment. The difference from the first embodiment is explained.

A difference from the first embodiment is setting of the delay adding unit 115. The delay adding unit 115 adds a delay among four lanes with respect to a four-lane multi-value signal represented by 2 Sample/Symbol input from the polarity inverting unit 114. In the third embodiment, the delay adding unit 115 performs delay addition of a half symbol, that is, T_{S}/2 to the YI lane and the YQ lane. The delay adding unit 115 performs delay addition of a quarter symbol, that is, T_{S}/4 to the XQ lane and the YQ lane. A delay amount in the YQ lane is 3/4 symbol, that is, 3T_{S}/4 in total. The delay adding unit 115 outputs the four-lane multi-value signal represented by 2 Sample/Symbol to the lane replacing unit 116.

An example of changes of signals made by the processing by the components of the optical transmission device 100 according to the third embodiment is explained.

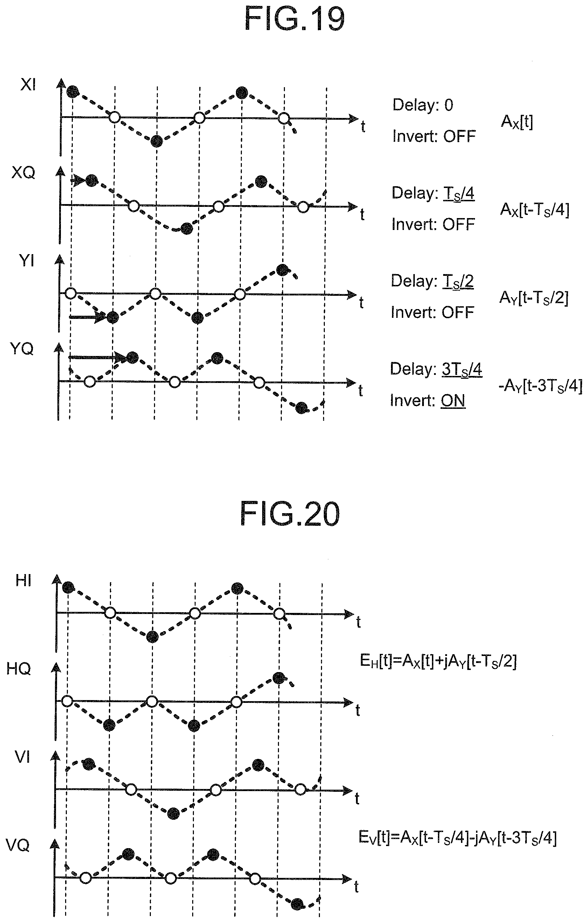

FIG. 19 is a diagram illustrating an example of the four-lane multi-value signal after performed by the waveform converting unit 113, the polarity inverting unit 114, and the delay adding unit 115 according to the third embodiment. As in the first embodiment, the waveform converting unit 113 inserts zero into the middle between symbols to perform the RZ on all four lanes. In the example, the polarity inverting unit 114 inverts the polarity of only the YQ lane. In the third embodiment, delay addition of a quarter symbol, that is, T_{S}/4 is performed to the XQ lane, delay addition of a half symbol, that is, T_{S}/2 is performed to the YI lane, and delay addition of a 3/4 symbol, that is, 3T_{S}/4 is performed to the YQ lane by the delay adding unit 115. Consequently, in the third embodiment, a signal of the XI lane can be represented as Ax[t], a signal of the XQ lane can be represented as Aₓ[t-T_{S}/4], a signal of the YI lane can be represented as A_{Y}[t-T_{S}/2], and a signal of the YQ lane can be represented as -A_{Y}[t-3T_{S}/4].

FIG. 20 is a diagram illustrating, for each of the lanes of an optical signal, an example of a signal after performed by the lane replacing unit 116 and the optical-signal generating unit 120 according to the third embodiment. The four lanes of the optical signal are HI, HQ, VI, and VQ. In FIG. 20, an example is illustrated in which the lane replacing unit 116 performs lane replacement in such a manner as HI=XI, HQ=YI, VI=XQ, and VQ=YQ with respect to XI, XQ, YI, and YQ illustrated in FIG. 19. E_{H}[t]=A_{X}[t]+jA_{Y}[t-T_{S}/2] and E_{V}[t]=A_{X}[t-T_{S}/4]-jA_{Y}[t-3T_{S}/4] in FIG. 20 represent optical signals of an H polarized wave and a V polarized wave with complex electric field amplitudes. In the third embodiment, the optical-signal generating unit 120 linearly performs generation processing on an optical signal and performs normalization of amplitude. In the above expressions, j is an imaginary number unit. This is equivalent to processing for performing 90-degree phase rotation of a Y polarized wave signal, giving a delay difference of T_{S}/2 between X/Y polarized waves, performing 45-degree polarization rotation of a signal represented by the X/Y polarized waves, and giving a delay difference to T_{S}/4 between H/V polarized waves. Giving T_{S}/2 between X/Y polarized wave signals subjected to the RZ is equal to generating a polarization multiplexed iRZ signal. By giving the delay difference between the H/V polarized waves, an effect of dispersing waveform distortion caused by the fiber nonlinear optical effect is expected.

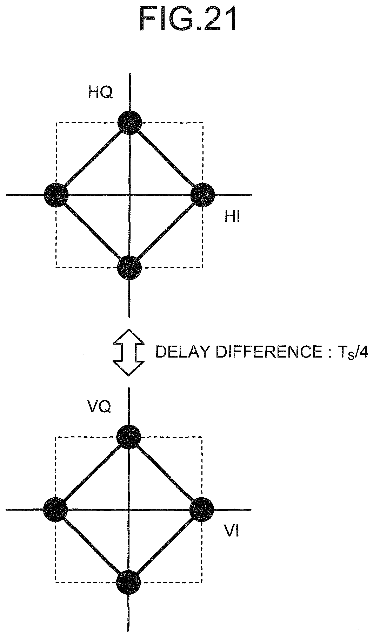

FIG. 21 is a diagram illustrating an example of signal point arrangement according to the third embodiment. In FIG. 21, FIG. 19 illustrating a time waveform for each lane of an optical signal is represented again as signal point arrangement for each polarization. In both of the H polarized wave and the V polarized wave, symbol centers take points obtained by performing 45-degree phase rotation of the QPSK signal. There is a delay difference of T_{S}/4 between the H polarized wave and the V polarized wave. Although the signal point arrangement is different from the signal point arrangement of the QPSK signal, because signal points are arranged without a correlation with the I axis/the Q axis and equally, the polarization multiplexed I/Q modulator can be used as the optical modulator. The control for QPSK can be used as the optical modulator control. The optical transmission device 100 is compatible with the other modulation schemes. As explained above, in the third embodiment, the optical signal is the signal obtained by adding, to the polarization multiplexed iRZ-BPSK signal, the phase rotation, the polarization rotation, and an inter-polarization delay difference on polarization surfaces shifted by 45 degrees from a signal polarized wave. Therefore, the optical signal has nonlinear resistance equivalent to or more than the nonlinear resistance of the polarization multiplexed iRZ-BPSK signal. In the optical transmission device 100, the phase rotation, the polarization rotation, and the inter-polarization delay difference on a plurality of polarization surfaces is added to the signals of the lanes by the waveform conversion by the waveform converting unit 113, the polarity inversion by the polarity inverting unit 114, the delay adding by the delay adding unit 115, and the replacement of the lane by the lane replacing unit 116.

Note that the phase rotation, the polarization rotation, the inter-polarization delay difference are compensated by the adaptive equalization performed by the adaptive equalizing unit 312 of the received electricity processing unit 310 of the optical reception device 300. The adaptive equalizing unit 312 of the received electricity processing unit 310 performs adaptive equalization processing to compensate for the phase rotation, the polarization rotation, and the inter-polarization delay difference on the polarization surfaces added to the electric digital signal by the optical transmission device 100. For example, the adaptive equalizing unit 312 can restore Ax[t] in accordance with the arithmetic operation of "(E_{H}[t]+E_{V}[t-T_{S}/4])/2" and can restore Ay[t] in accordance with the arithmetic operation of "(E_{H}[t-T_{S}/2]-E_{V}[t-3T_{S}/4]/(2j)".

The delay adding unit 115 desirably corrects delay amounts given to the lanes XI, XQ, YI, and YQ so as to minimize the absolute value of a delay adjustment value from an initial condition. In the third embodiment, the delay adding unit 115 sets relative delay amounts of the lanes as XI: 0, XQ: T_{S}/4, YI: T_{S}/2, and YQ: 3T_{S}/4. However, this is an example. The delay adding unit 115 can set the relative delay amounts as XI: -3T_{S}/8, XQ: -T_{S}/8, YI: T_{S}/8, and YQ: 3T_{S}/8.

In the third embodiment, switching speed of a four-lane optical signal is a quadruple of switching speed for each one lane. Therefore, changing speed of a polarization state that changes depending on a data pattern is also a quadruple. Consequently, it is possible to randomize and reduce the influence of a fiber nonlinear optical effect that occurs when the polarization state is fixed. In this way, when the four-lane multi-value signal is delayed by the delay adding unit 115, signal switching speed of the optical signal output from the optical-signal generating unit 120 is m times, here, four times as large compared with the signal switching speed of the optical signal output from the optical-signal generating unit 120 when the four-lane multi-value signal is not delayed by the delay adding unit 115 as in the first embodiment.

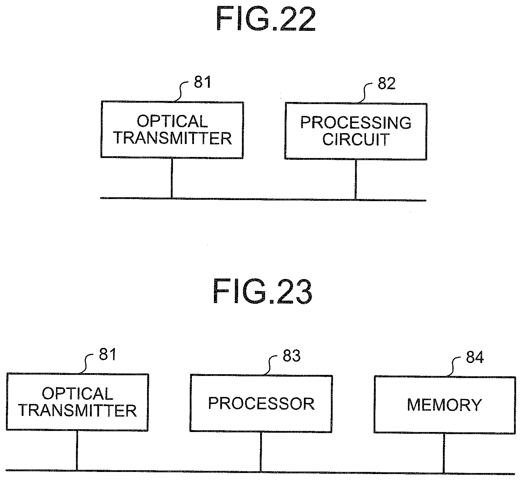

A hardware configuration of the optical transmission device 100 is explained. FIG. 22 and FIG. 23 are diagrams illustrating example configurations of hardware for realizing the optical transmission device 100 according to the first embodiment to the third embodiment. The optical-signal generating unit 120 in the optical transmission device 100 is an optical transmitter 81. The functions of the symbol mapping unit 111, the data duplicating unit 112, the waveform converting unit 113, the polarity inverting unit 114, the delay adding unit 115, and the lane replacing unit 116 of the transmission-electricity processing unit 110 in the optical transmission device 100 are realized by a processing circuit 82. That is, the optical transmission device 100 includes the processing circuit 82 for performing symbol mapping on a signal input from the outside, performing duplication processing for increasing the number of lanes, performing waveform conversion by zero insertion, inverting the polarity of a signal of any lane, adding a delay between the lanes, and performing lane replacement. The processing circuit 82 can be dedicated hardware or can be a processor 83, which executes a program stored in a memory 84, and the memory 84. The processor 83 can be a central processing unit (CPU), a central processing device, a processing device, an arithmetic device, a microprocessor, a microcomputer, a digital signal processor (DSP), or the like.

When the processing circuit 82 is the dedicated hardware, the processing circuit 82 corresponds to, for example, a single circuit, a composite circuit, a programmed processor, a parallel-programmed processor, an application specific integrated circuit (ASIC), a field programmable gate array (FPGA), or a combination of the foregoing. The respective functions of the symbol mapping unit 111, the data duplicating unit 112, the waveform converting unit 113, the polarity inverting unit 114, the delay adding unit 115, and the lane replacing unit 116 of the transmission-electricity processing unit 110 can be realized by the processing circuit 82 or the functions of the units can be collectively realized by the processing circuit 82.

When the processing circuit 82 is a CPU or the like, the functions of the symbol mapping unit 111, the data duplicating unit 112, the waveform converting unit 113, the polarity inverting unit 114, the delay adding unit 115, and the lane replacing unit 116 of the transmission-electricity processing unit 110 are realized by software, firmware, or a combination of the software and the firmware. The software and the firmware are described as programs and stored in the memory 84. The processor 83 reads out and executes the programs stored in the memory 84, whereby the processing circuit 82 realizes the functions of the units. That is, the optical transmission device 100 includes a memory for storing programs that, when being executed by the processing circuit 82, resultantly execute a step of performing symbol mapping on a signal input from the outside, a step of performing duplication processing for increasing the number of lanes, a step of performing waveform conversion by zero insertion, a step of inverting the polarity of a signal of any lane, a step of adding a delay between lanes, and a step of performing lane replacement. The programs are considered to be programs for causing a computer to execute procedures and methods of the symbol mapping unit 111, the data duplicating unit 112, the waveform converting unit 113, the polarity inverting unit 114, the delay adding unit 115, and the lane replacing unit 116 of the transmission-electricity processing unit 110. The memory 84 corresponds to, for example, a nonvolatile or volatile semiconductor memory such as a random access memory (RAM), a read only memory (ROM), a flash memory, an erasable programmable ROM (EPROM), or an electrically erasable programmable ROM (EEPROM), a magnetic disk, a flexible disk, an optical disk, a compact disc, a minidisc, or a Digital Versatile Disc (DVD).

Note that, concerning the functions of the symbol mapping unit 111, the data duplicating unit 112, the waveform converting unit 113, the polarity inverting unit 114, the delay adding unit 115, and the lane replacing unit 116 of the transmission-electricity processing unit 110, a part of the functions can be realized by dedicated hardware and a part of the functions can be realized by software or firmware. For example, the functions of the symbol mapping unit 111, the data duplicating unit 112, and the waveform converting unit 113 can be realized by the processing circuit 82 functioning as dedicated hardware. The functions of the polarity inverting unit 114, the delay adding unit 115, and the lane replacing unit 116 can be realized by the processing circuit 82 reading out and executing the programs stored in the memory 84.

In this way, the processing circuit 82 can realize the functions explained above with the hardware, the software, the firmware, or a combination of the hardware, the software, and the firmware.

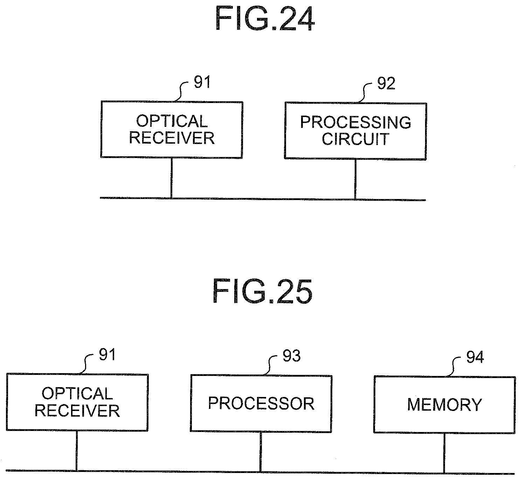

A hardware configuration of the optical reception device 300 is explained. FIG. 24 and FIG. 25 are diagrams illustrating configuration examples of hardware for realizing the optical reception device 300 according to the first embodiment to the third embodiment. The optical-signal detecting unit 320 in the optical reception device 300 is an optical receiver 91. The functions of the waveform equalizing unit 313, the adaptive equalizing unit 312, and the symbol demapping unit 311 of the received electricity processing unit 310 in the optical reception device 300 are realized by a processing circuit 92. That is, the optical reception device 300 includes the processing circuit 92 for performing waveform equalization processing, performing adaptive equalization processing, and performing symbol demapping. The configurations of the processing circuit 92, the processor 93, and the memory 94 are the same as the configurations of the processing circuit 82, the processor 83, and the memory 84 explained above. Therefore, detailed explanation of the configurations is omitted.

As explained above, according to this embodiment, the optical transmission device 100 can be configured by the transmission-electricity processing unit 110 and the optical-signal generating unit 120, which can be configured by versatile components and is compatible with the other modulation schemes. The optical transmission device 100 duplicates each of the binary data signals of two lanes into two and configures binary data signals of four lanes; generates optical signals on the basis of a four-lane multi-value signal generated by performing, on the binary data signals of the four lanes, conversion into a waveform of a ternary value or greater, polarity inversion, delay addition, and lane replacement; and transmits a signal obtained by combining optical signals of the four lanes. In this way, the optical transmission device 100 can generate and transmit, with a simple configuration of components having high versatility, an optical signal, equal to or more than the polarization multiplexed iRZ-BPSK signal, that can reduce a nonlinear optical effect caused during long-distance fiber transmission and suppress quality deterioration of a reception signal. It is possible to achieve a reduction in the cost and to extend the transmission distance of the optical transmission system 1. Compared with the second embodiment, it is possible to increase switching speed of the four-lane optical signal.

The optical transmission device 100 can generate and output an optical signal without using non-versatile optical components for inter-polarization delay difference addition. It is possible to avoid signal quality deterioration due to a shift of an inter-polarization delay difference addition amount.

Note that, it goes without saying that, in the symbol mapping unit 111, the data duplicating unit 112, the waveform converting unit 113, the polarity inverting unit 114, the delay adding unit 115, and the lane replacing unit 116, the processing other than the processing examples described in the first embodiment to the third embodiment is possible. In particular, any optimization of the delay addition amount in the delay adding unit 115 is possible according to a transmission condition.

In the first embodiment to the third embodiment, the alternation method of the polarization multiplexed RZ-BPSK signal and the polarization multiplexed iRZ-BPSK signal is explained. However, besides the contents described in the first embodiment to the third embodiment, the present invention can be partially used by, for example, changing the symbol mapping unit 111 to a symbol mapping unit adapted to the polarization multiplexed QPSK, the polarization multiplexed m-value QAM, or any modulation scheme. That is, it is possible to contribute to reception signal quality improvement by the RZ, the polarization rotation, the inter-polarization delay difference addition, and the like.

In the present invention, to execute, with electric processing, the RZ, the delay difference addition, and the like, it is possible to suppress deterioration that occurs because of a yield and the like of conventional optical components.

In the present invention, it is assumed that a symbol rate per one channel is mainly set in a range of 1 Gsymbol/s to 100 Gsymbol/s and is used. However, the present invention does not limit the symbol rate to the range mentioned above. It is also possible to mix signals of different symbol rates among a plurality of channels.

The optical transmission device, the optical reception device, the optical transmission system, and the optical transmission method are useful for long-distance large-capacity optical transmission.

The configurations explained in the embodiments indicate examples of the contents of the present invention. The configurations can be combined with other well-known technologies. It is possible to omit or change a part of the configurations in a range not departing from the spirit of the present invention.

### Reference Signs List

- 1: optical transmission system
- 51: digital/analog converter
- 52: modulator driver
- 53: light source
- 54: polarization multiplexed I/Q optical modulator
- 61: local-oscillation light source
- 62: coherent receiver
- 63: analog/digital converter
- 100: optical transmission device
- 110: transmission-electricity processing unit
- 120: optical-signal generating unit
- 111: symbol mapping unit
- 112: data duplicating unit
- 113: waveform converting unit
- 114: polarity inverting unit
- 115: delay adding unit
- 116: lane replacing unit
- 200: transmitting unit
- 300: optical reception device
- 310: received electricity processing unit
- 311: symbol demapping unit
- 312: adaptive equalizing unit
- 313: waveform equalizing unit
- 320: optical-signal detecting unit

## Claims

1. An optical transmission device comprising:
a data duplicating unit to duplicate signals of lanes subjected to symbol mapping and set a number of the lanes to a number of lanes equivalent to a first number;
a waveform converting unit to convert, for the signals of the lanes, a waveform of a signal that can take a value of a type of a second number into a signal that can take a value of a type of a third number that is larger than the second number;
a polarity inverting unit to invert polarity of signals of one or more lanes among the lanes in which the numbers of the values that the signals can take are converted;
a lane replacing unit to perform replacement of lanes in two or more lanes; and
an optical-signal generating unit to convert electric signals of the lanes input from the lane replacing unit into optical signals and combine and output the optical signals of each of the lanes.

2. The optical transmission device according to claim 1, wherein
the first number is set to 4, the second number is set to 2, and the third number is set to 3,
the data duplicating unit duplicates signals of two lanes having signals that can take binary values into signals of four lanes having signals that can take binary values, and
the waveform converting unit converts the signals of the four lanes having signals that can take binary values into signals of four lanes having signals that can take ternary values.

3. The optical transmission device according to claim 1 or 2, further comprising a delay adding unit to add a delay to the signals of the lanes input from the polarity inverting unit.

4. The optical transmission device according to claim 3, wherein,
when a signal is delayed by the delay adding unit, a signal switching speed of an optical signal output from the optical-signal generating unit is m times as fast as a signal switching speed of an optical signal output from the optical-signal generating unit when the signal is not delayed by the delay adding unit.

5. The optical transmission device according to claim 4, wherein the m is 2 or 4.

6. The optical transmission device according to claim 1 or 2, wherein
phase rotation and polarization rotation are added to the signals of each of the lanes by the waveform conversion performed by the waveform converting unit, the polarity inversion performed by the polarity inverting unit, and the replacement of the lanes performed by the lane replacing unit.

7. The optical transmission device according to claim 3, 4, or 5, wherein
phase rotation, polarization rotation, and an inter-polarization delay difference on a plurality of polarization surfaces are added to the signals of each of the lanes by the waveform conversion performed by the waveform converting unit, the polarity inversion performed by the polarity inverting unit, the delay addition performed by the delay adding unit, and the replacement of the lanes performed by the lane replacing unit.

8. An optical reception device that receives an optical signal transmitted from the optical transmission device according to claim 6, the optical reception device comprising:
an optical-signal detecting unit to detect the optical signal and convert the optical signal into an electric signal; and
a received electricity processing unit to perform adaptive equalization processing to compensate for phase rotation and polarization rotation that are added to a signal by the optical transmission device.

9. An optical reception device that receives an optical signal transmitted from the optical transmission device according to claim 7, the optical reception device comprising:
an optical-signal detecting unit to detect the optical signal and convert the optical signal into an electric signal; and
a received electricity processing unit to perform adaptive equalization processing to compensate for phase rotation, polarization rotation, and an inter-polarization delay difference on a plurality of polarization surfaces added to a signal by the optical transmission device.

10. An optical transmission system comprising:
the optical transmission device according to claim 6;
the optical reception device according to claim 8; and
a transmission line including an optical fiber, the transmission line connecting the optical transmission device and the optical reception device.

11. An optical transmission system comprising:
the optical transmission device according to claim 7;
the optical reception device according to claim 9; and
a transmission line including an optical fiber, the transmission line connecting the optical transmission device and the optical reception device.

12. An optical transmission method of an optical transmission device that transmits an optical signal to an optical reception device, the optical transmission method comprising:
a duplicating step for
duplicating signals of each of the lanes subjected to symbol mapping and
setting a number of the lanes to a number that is a first number;
a converting step for
converting, for the signals of the duplicated lanes, a waveform of a signal that can take a value of a type of a second number into a signal that can take a value of a type of a third number that is larger than the second number;
an inverting step for inverting polarity of signals of one or more lanes among the lanes in which the numbers of the values that the signals can take are converted;
a replacing step for performing replacement of lanes in two or more lanes; and
an optical-signal output step for
converting electric signals of the signals of each of the lanes into optical signals and
combining and outputting the optical signals of each of the lanes.

13. The optical transmission method according to claim 12, further comprising a delay adding step for adding a delay to the signals of each of the lanes after processing in the inverting step.
